# EUROPÄISCHE PATENTSCHRIFT

(11) **EP 3 338 085 B1**
(45) Veröffentlichungstag und Bekanntmachung des Hinweises auf die Patenterteilung: **08.05.2024**
(21) Anmeldenummer: 17700596.4
(22) Anmeldetag: 18.01.2017
(51) Int. Cl.: G01N 31/12, B01J 23/00, B01J 23/889

(54) **VERFAHREN ZUR ELEMENTARANALYSE**
METHOD FOR ELEMENTARY ANALYSIS
PROCEDE DESTINE A L'ANALYSE ELEMENTAIRE

(30) Priorität: 18.01.2016 EP 16000112
(43) Veröffentlichungstag der Anmeldung: 27.06.2018
(73) Patentinhaber: C. Gerhardt GmbH & Co. KG, 53639 Königswinter (DE)
(72) Erfinder: KÜPPERS, Werner, 53639 Königswinter (DE); MACKE, Jan, 53639 Königswinter (DE)
(74) Vertreter: Grünecker Patent- und Rechtsanwälte PartG mbB
(86) Internationale Anmeldenummer: PCT/EP2017/000056
(87) Internationale Veröffentlichungsnummer: WO 2017/125246

(56) Entgegenhaltungen:
- DE-A1- 10 252 103
- DE-T2- 3 688 926
- US-A- 3 972 682
- US-A1- 2010 266 473
- "DUMATHERM CN ELEMENTAL ANALYSER for CARBON and NITROGEN", C. Gerhardt GmbH & Co. KG , Juni 2012 (2012-06), Seiten 1-4, XP055297465, Gefunden im Internet: URL:http://www.labsynergy.com/wp-content/u ploads/Nitrogen-Combustion.pdf [gefunden am 2016-08-24]
- KÜPPERS WERNER: "Fallstudie: Dumas-Stickstoffbestimmung - Sind Makro-Einwaagen bei Makro-Kosten noch zeitgemäß?", MÜHLE + MISCHFUTTER; VERLAG MORITZ SCHÄFER, DETMOLD, DE , Bd. 10 21. Mai 2015 (2015-05-21), Seiten 302-305, XP055297476, Gefunden im Internet: URL:http://www.gerhardt.de/fileadmin/Redak tion/content/dumatherm/casestudy_DUMATHERM _macroweights_german.pdf [gefunden am 2016-08-24]

## Beschreibung

Die vorliegende Erfindung betrifft ein Verfahren zur Elementaranalyse, insbesondere zur Bestimmung von Kohlenstoff und Stickstoff in einer Probe, sowie eine dazu geeignete Vorrichtung und die Verwendung eines dazu geeigneten Katalysators/einer dazu geeigneten Katalysatormischung.

### Stand der Technik

Elementaranalysen, insbesondere die Bestimmung von Kohlenstoff und Stickstoff in einer Probe sind aus vielen Gründen inzwischen notwendiger Bestandteil von Produktionsabläufen. So muss beispielsweise auf Grund der Vorschriften zur Abfallbeseitigung für viele Abfallarten die Bestimmung des (organischen) Kohlenstoffgehaltes erfolgen, der dann entscheidend für die Einstufung in jeweiligen Deponieklassen ist. Stickstoffgehalte sind beispielsweise relevante Faktoren zur Bestimmung der Wasserqualität von Ab-, Brauch- und Flusswasser. Ebenfalls wichtig ist die Bestimmung des Kohlenstoff- und Stickstoffgehalts bei Bodenproben, oder auch Proben pflanzlichen Ursprungs.

Für derartigen Untersuchungen gibt es gut etablierte Verfahren, die im Wesentlichen darauf beruhen, dass (trockene) Proben im hohen Sauerstoffüberschuss bei hohen Temperaturen oxidiert/mineralisiert werden. Die relevanten Elemente, insbesondere Kohlenstoff und Stickstoff werden dabei vollständig in (gasförmige) Oxide überführt, die anschließend durch bekannte Techniken detektiert bzw. quantifiziert werden können. Ein Problem bei derartigen Elementaranalysen ist jedoch die Tatsache, dass z.B. der in einer Probe vorliegende Kohlenstoff selbst bei hohen Temperaturen und hohem Sauerstoffüberschuss nicht vollständig zu CO₂ oxidiert, sondern immer noch ein für die nachfolgende Quantifizierung problematischer Anteil an Kohlenmonoxid verbleibt. Daher wird üblicherweise das nach der ersten Oxidation erhaltene Gasgemisch einer Nachbehandlung unterworfen (ebenfalls in einem großen Sauerstoffüberschuss), um noch vorliegendes Kohlenmonoxid sicher, vollständig und reproduzierbar zu Kohlendioxid umzuwandeln. Dabei kommen in der Regel Katalysatoren auf Chrombasis zum Einsatz. Ein weiteres Problem, das teilweise auftritt ist die mangelnde Sicherstellung einer gut reproduzierbaren Oxidationsreaktion, da nur bei Vorliegen reproduzierbarer Vorgänge eine nicht nur qualitative sondern auch quantitative Analyse möglich ist.

Ein zusätzliches Problem bei Elementaranalysen betrifft das Vorliegen leichtflüchtiger organischer Verbindungen, die ebenfalls einer katalytischen Nachoxidation unterworfen werden müssen, um so ein vollständiges Ergebnis bei der Analyse von Kohlenstoff zu ermöglichen. Auch hierzu werden im Stand der Technik im Wesentlichen auf Chrom basierte Katalysatoren eingesetzt.
"Dumatherm CN Elemental Analysers for Carbon and Nitrogen", Juni 2012, Seiten 1 bis 4, beschreibt ein Gerät zur Elementaranalyse zur Bestimmung von Kohlenstoff und Stickstoff. Die DE 102 52 103 betrifft einen Mischoxid-Katalysator, insbesondere zur selektiven Oxidation von CO in wasserstoffreichen Gasgemischen, oder in sauerstoffhaltigen Gasgemischen in Gegenwart von Wasser und Kohlendioxid, enthaltend etwa 15 bis 30 at.-% Cu, etwa 55 bis 77 at.-% Mn und etwa 7,5 bis 10 at.-% Ce.
DE 36 88 926 betrifft einen monolithischen Verbrennungskatalysator mit Wabenstruktur auf der Basis eines Nichtedelmetalls und ein Verfahren zu seiner Herstellung.

### Aufgabe der Erfindung

Wünschenswert wäre aber der Verzicht auf Chrom basierten Katalysatoren, da diese Materialien erhebliche Gesundheits- und Umweltrisiken bedeuten. Gleichzeitig darf dabei allerdings nicht die Verlässlichkeit der katalytischen Nachbehandlung (Oxidation zu CO₂ von vorliegenden nicht vollständig zu CO₂ oxidierten Kohlenstoffanteilen) beeinträchtigt werden. Drüber hinaus sollten Verfahren zumindest in gewissem Maß tolerant gegenüber problematischen Inhaltsstoffen sein, wie insbesondere Halogene und salzartigen Komponenten. Das Verfahren sollte darüberhinaus auch eine Verarbeitung einer hohen Anzahl an Proben ohne Qualitätsabfall ermöglichen. Es ist daher die Aufgabe der vorliegenden Erfindung ein entsprechendes Verfahren zur Elementaranalyse, insbesondere zur Bestimmung von Stickstoff und Kohlenstoff zur Verfügung zu stellen.

### Kurze Beschreibung der Erfindung

Gelöst wird die Aufgabe durch ein Verfahren gemäß Anspruch 1, durch die Verwendung nach Anspruch 7 sowie die Vorrichtung nach Anspruch 8. Bevorzugte Ausgestaltungen der Erfindung sind in den Unteransprüchen angegeben sowie in der nachfolgenden Beschreibung.

### Detaillierte Beschreibung der Erfindung

Das Verfahren der Vorliegenden Erfindung ist dadurch gekennzeichnet, dass ein chromfreier Mischoxidkatalysator, umfassend Ce, Mn und Cu als Katalysator zur Oxidation nach der Volatilisierung bei hoher Temperatur im Sauerstoffstrom eingesetzt wird. Derartigen Verfahren arbeiten mit inerten Trägergasen, insbesondere Argon und/oder Helium, wobei dann ein Sauerstoffstrom zur Oxidation zugesetzt wird. Bevorzugt ist dabei der Einsatz reinen Sauerstoffs, obwohl theoretisch auch Mischungen mit Inertgasen denkbar sind. Auf Grund des in Übereinstimmung mit der vorliegenden Erfindung verwendeten Katalysatoren ist eine Überdosierung an Sauerstoff nicht notwendig. Unter Berücksichtigung der Probeneinwaage und ggf. des Probentyps kann eine ausreichende Sauerstoffmenge berechnet und ein entsprechender Sauerstofffluss eingestellt werden, so dass in diesem Zusammenhang auch der Verbrauch an notwendigerweise hochreinen Gasen minimiert wird. Es hat sich unerwartet gezeigt, dass ein derartiger Katalysator gut geeignet ist um sicherzustellen, dass die gewünschte vollständige Oxidation bei der Nachbehandlung erfolgt. Insbesondere der Einsatz von Helium als Trägergas ermöglich darüberhinaus in Kombination mit den nachfolgend beschriebenen Detektionsmethoden eine genaue Bestimmung auch sehr niedriger Stickstoffgehalte.
Damit kann unter Beibehaltung der üblichen Verfahrensabläufe auf den Einsatz Chrom basierter Katalysatoren sowie dem Einsatz von Nachverbrennungsrohren verzichtet werden, ohne dass Abstriche an die Genauigkeit und Reproduzierbarkeit der Messung gemacht werden müssen. Das erfindungsgemäße Verfahren eignet sich insbesondere zur Bestimmung von Kohlenstoff (anorganischer und organischer Herkunft) sowie Stickstoff und zeigt keine Probleme bei der Bestimmung von Proben, die hohe Anteile and leicht flüchtigen organischen Komponenten (VOC) aufweisen. Dabei kann vorteilhafterweise auf die bereits bestehenden, grundsätzlichen und dem Fachmann bekannten Verfahrensabläufe zurück gegriffen werden, so dass die vorliegende Erfindung einfach in bereits existierenden Systemen implementiert werden kann. Beispielsweise können die zu untersuchenden Proben in geeigneter und bekannter Weise eingekapselt werden, um die Probe so ohne weitere Kontamination, z.B. über einen Autosampler in eine Brennkammer einzuführen (der Begriff Brennkammer benennt hier den Teil eines Vorrichtung, in der die Probe der ersten Hochtemperaturbehandlung im leichten Sauerstoffüberschuss unterworfen wird). Sollte die zu untersuchende Probe selbst schon flüssig sein und beim Einspritzen/Einbringen in den Bereich hoher Temperatur quantitativ verdampfen, kann die Probeneingabe und die Sauerstoffdosierung selbstverständlich entsprechend modifiziert werden. In jedem Fall werden die gasförmigen Bestandteile dann erfindungsgemäß in Gegenwart des hier definierten chromfreien Katalysatoren im Sauerstoffüberschuss oxidiert, um somit ein für die qualitative und quantitative Analyse geeignetes Gasgemisch zu erhalten.

Der in der vorliegenden Erfindung einzusetzende Katalysator umfasst ein Gemisch aus Oxiden der Metalle Cu, Mn und Ce auf einem Träger aus Aluminiumoxid, und ist dadurch gekennzeichnet, dass die Menge an Ce, Mn und Cu im Katalysator (Masseverhältnis) das Verhältnis Ce < Mn < Cu erfüllt und der Katalysator edelmetallfrei ist und kein Ag, Ti oder Zr sowie kein giftiges Cr oder Ni enthält. Derartige Katalysatoren sind aus dem Bereich der Abgasbehandlung bekannt und können beispielsweise von der Firma Interkat bezogen werden. Vorteilhafterweise sind die Mengenanteile der Metallkomponenten (Co + Mn + Ce = 100 Atom-%) so ausgewählt, dass jede Komponente in einer Menge von mindestens 5 Atom-% vorliegt. Die Mengen an Kupfer und Mangan sind jeweils größer als die Menge an Ce, wobei der Anteil an Cu wiederum höher als der Anteil an Mn ist. Der einzusetzende Katalysator liegt als geträgerter Katalysator vor, d.h. die Metalloxidkomponenten liegen fein verteilt auf einem Träger aus Aluminiumoxid vor. Geeignete Träger sind insbesondere keramische Materialien, wie Al₂O₃. Die Herstellung derartiger Katalysatoren ist dem Fachmann bekannt, beispielsweise durch Washcoat-Verfahren. Derartige geträgerte Katalysatoren können beispielsweise in der Form von kleinen Kügelchen oder Pellets vorliegen, so dass eine einfache Handhabung gesichert ist. Durch den Einsatz geträgerter Katalysatoren (d.h. Katalysatoren die auf Materialien großer Oberfläche, wie poröse Materialien, aufgebracht sind) kann in einfacher Art und Weise die aktive Oberfläche des Katalysatoren vergrößert werden, so dass in vielen Anwendungsfällen geträgerte Katalysatoren effektiver sind. Wenn beispielsweise auf Al₂O₃ geträgerte Katalysatoren verwendet werden, so liegen diese bevorzugt in der Form kleiner Pellets oder Kugeln vor, mit Durchmessern von 1 bis 6 mm, bevorzugt 1 bis 4 mm. Derartige Größen sorgen für eine einfache Handhabbarkeit und stellen für den Betrieb einer Anlage zur Elementaranalyse geeignete Eigenschaften zur Verfügung; insbesondere wird der Gasstrom durch ein Bett mit derartigen geträgerten Katalysatoren nicht gestört, so dass eine problemlose Elementaranalyse ermöglicht wird. Es ist in diesem Zusammenhang überraschend, dass die erfindungsgemäß einzusetzenden Katalysatoren eine derartig reproduzierbare und vollständige Oxidation ermöglichen, so dass ein Einsatz für die quantitative Elementaranalyse unterschiedlichster Probenmatrices nutzbar wird. Bereits kleinste Variationen bei der Oxidation würden zu Messergebnissen führen, die für die erforderliche Genauigkeit bei der Elementaranalyse nicht mehr verwertbar sind. Es ist daher als überraschend anzusehen, dass derartigen Katalysatoren, die für eher großtechnische Anwendungen entwickelt wurden, den "Goldstandart" Chromkatalysator ohne Einbuße and die Genauigkeit der Messungen ersetzen können. Somit ermöglicht die vorliegende Erfindung die problemlose und exakte Bestimmung von Stickstoff- und Kohlenstoffgehalt in Proben mit der erforderlichen Genauigkeit. Dabei hat sich gezeigt, dass im Vergleich mit herkömmlichen Katalysatoren auch die Anzahl der vermessbaren Proben, ohne dass eine Regenration oder gar ein Austausch an Katalysator notwendig wird, durch den Einsatz des erfindungsgemäß zu verwendenden Katalysatoren gesteigert werden kann. So können nicht nur mehrere Hundert Proben sondern deutlich mehr als 800 Proben im Standardbetrieb mit dem erfindungsgemäß einzusetzenden Katalysatoren vermessen werden, wobei Probenzahlen von mehr als 1000 (z.B. bis zu 1200) ohne Qualitätsverlust (und ohne dass eine Regeneration oder gar ein Katalysatoraustausch notwendig ist) sich als möglich erwiesen haben.

Wie bereits ausgeführt, kann die erfindungsgemäße Vorrichtung zur Elementaranalyse auf bestehende Technologien zurück greifen. Eine derartige Vorrichtung, basierend beispielsweise auf den DUMATHERM Vorrichtungen der Anmelderin, umfasst vorzugsweise, zur Sicherung eines automatischen Analysenablaufs, einen automatischen Probengeber, der die zu analysierende Probe automatisch in den Bereich einführt, in dem die Verdampfung und Oxidation stattfindet. Dieser Autosampler kann ein Injektionssystem (für flüssige Proben) sein, oder aber auch System mit Greifarm und geeigneten Schleusen zur Verarbeitung fester Proben, die beispielsweise in geeigneter Form verkapselt worden sind (z.B. in Folien aus Zinn oder etc.). Der für die Oxidation notwendige Sauerstoffüberschuss kann durch Einführung geeigneter Gase erfolgen, wobei Mischungen aus Inertgasen (die die Analyse aber nicht beeinträchtigen dürfen, z.B. also Argon oder Helium) mit Sauerstoff oder auch reiner Sauerstoff geeignet sind. Die Vorrichtung umfass weiterhin eine "Brennkammer" zur Behandlung der Proben bei hoher Temperatur im Sauerstoffstrom sowie, getrennt davon oder direkt kombiniert, einen Bereich, in dem die gasförmigen Probenbestandteile, ggf. nach erster Oxidation im Sauerstoffüberschuss in Gegenwart des erfindungsgemäß einzusetzenden Katalysatoren oxidiert werden. Dieser Bereich kann beispielsweise ein mit dem Katalysator gefülltes Glasrohr sein.

Anschießend wird das vollständig oxidierte Gasgemisch den dem Fachmann bekannten weiteren Verfahrensstufen zugeführt, um die gewünschte quantitative Analyse durchzuführen. Die hierzu geeigneten Vorrichtungsbestandteile und Verfahrensparameter sind dem Fachmann bekannt

Die Temperatur für die Oxidationsbehandlung wie vorstehend beschrieben liegt beispielsweise im Bereich von 600 bis 1050°C, vorzugsweise 850 bis 950°C, da in diesem Temperaturbereich eine vollständige Oxidation sichergestellt wird ohne dass nachteilige Effekte für den Katalysator auftreten.

Die Temperatur in der ggf. vorzusehenden Brennkammer, also dem Teil der Vorrichtung, in dem die Proben zunächst verdampft/mineralisiert/oxidiert werden kann höher sein, falls erwünscht, solange kein negativer Effekt auf den einzusetzenden Katalysator ausgeübt wird. Möglich sind in diesem Bereich Temperaturen von über 1000°C, um eine möglichst schnelle und vollständige Überführung aller Bestandteile in den gasförmigen Zustand zu sichern.

Die Zusammensetzung der erfindungsgemäß zu verwendenden Katalysatoren kann in Anhängigkeit von den zu bestimmenden Proben variiert werden, um so Probleme zu vermeiden, die ggf. durch die Anwesenheit störender Komponenten auftreten können (z.B. Halogene). Durch den Einsatz der vorstehend beschriebenen Katalysatoren können derartige störende Einflüsse jedoch soweit minimiert werden, dass nachteilige Effekte auf die Analyse vermieden werden. Gegebenenfalls verringert sich die Lebensdauer der Katalysatoren, wenn viele Proben mit störenden Komponenten analysiert werden.

Die Bestimmung des Stickstoffgehalts der Probe kann in Übereinstimmung mit bekannten Verfahren durchgeführt werden, beispielsweise durch einen Wärmeleitfähigkeitsdetektor. Die dazu notwendigen Vorrichtungsdetails und Verfahrensführungen sind dem Fachmann bekannt. Dazu wird z.B. in einer Stufe des Verfahrens über einem geeigneten weiteren Katalysatoren, wie reines Kupfer (in geeigneter dem Fachmann bekannter Form), der Stickstoffanteil reduziert, so dass eine Quantifizierung ermöglicht wird (Verfahren nach Dumas).

Das CO₂ kann z.B. mittels IR-Detektor gemessen werden, möglich sind auch coulometrische Detektoren. Der Nachweis organischen Materials durch Verbrennung und anschließende CO₂-Messung im IR-Detektor ist im Prinzip bekannt, z.B. DE4436205 und Martin et al. (Nature 175 (1955), 422f). Das hier verwendete Verfahren erlaubt auch die Desorption und Messung des bei der Verbrennung entstandenen CO₂ mithilfe des bereits für die Stickstoffmessung verwendeten Wärmeleitfähigkeitsdetektors. Hierzu wird das zunächst vollständig an einer Zeolithoberfläche adsorbierte CO₂ durch Zuführung von Wärme wieder desorbiert und im gleichen Wärmeleitfähigkeitsdetektor gemessen wir vormals der Stickstoff. Dabei wird üblicherweise vorab der Wasseranteil vorher durch geeignete Verfahren abgetrennt. Somit können insbesondere auch feuchte oder stark Wasser haltige Proben problemlos analysiert werden (mit der zusätzlichen Möglichkeit ggf. diesen Wasseranteil getrennt zu bestimmen). Die Abtrennung des Wasseranteils sichert darüber hinaus auch die Lebensdauer einer Analyseeinrichtung. Der Detektor wird vorab mit geeigneten Referenzsubstanzen bekannten Stickstoff- und Kohlenstoffgehaltes kalibriert. Wenn auch die Kohlenstoffmenge mit Hilfe des vorstehend beschriebenen Wärmeleitfähigkeitsdetektors bestimmt wird, kann das gesamte Analyseverfahren und die entsprechende Vorrichtung im Hinblick auf notwendige Detektoren vereinfacht werden, da die beiden wesentlichen Bestandteile (Kohlenstoff und Stickstoff) mit dem gleichen Detektor bestimmt werden können. Dies vereinfacht sowohl die Verfahrensführung als auch die Vorrichtung als solche.

Nachfolgend wird das erfindungsgemäße Verfahren unter Heranziehung der Zeichnung beschrieben.
Figur 1 zeigt einen schematisch dargestellten apparativen Aufbau zur Durchführung der Analyse,
Figur 2 zeigt den schematisch in Figur 1 dargestellten apparativen Aufbau zur Durchführung des Verbrennungs-/Oxidationsschritts.

Als Gerätebasis für die Durchführung des erfindungsgemäßen Verfahrens kann ein Elementar-Analysator der Anmelderin eingesetzt werden, so dass in Bezug auf Gerätedetails, die in der nachfolgenden Beschreibung nicht im Einzelnen angeführt sind, auf diesen Analysator verwiesen wird (z.B. DUMATHERM Geräte der Anmelderin).

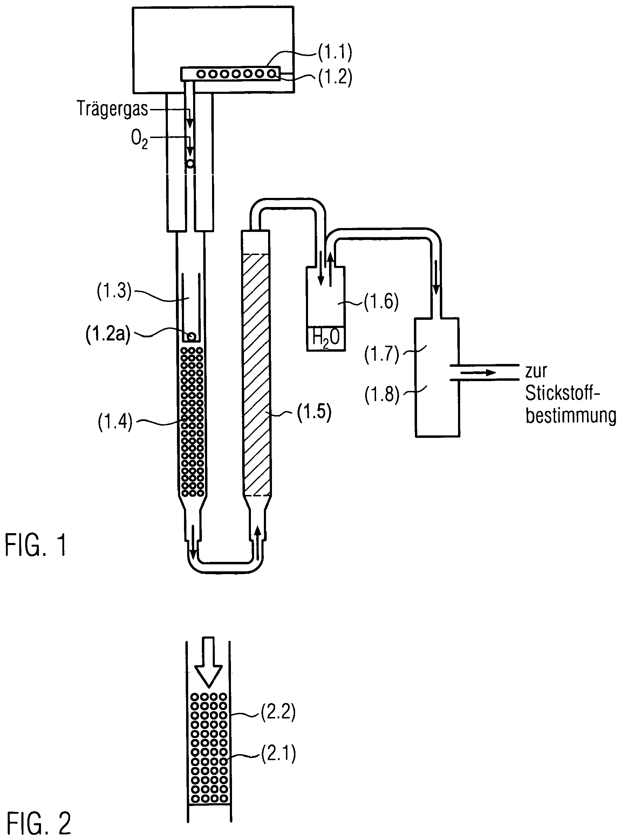

In Figur 1 ist schematisch der Analyseablauf und ein geeigneter Apparateaufbau gezeigt. In einem automatischen Probengeber (1.1) sind mehrere Proben (1.2) angeordnet, die in kontrollierter Weise in den Bereich der Verbrennung/Oxidation gebracht werden. Dabei fällt beispielsweise eine Probe (1.2a) zunächst in einen Bereich hoher Temperatur (1.3). Nachfolgend wird die erfindungsgemäße Aufoxidation in einem Bereich mit dem erfindungsgemäßen Katalysator (1.4) durchgeführt. Die gasförmige Mischung wird dann zunächst durch einen Reduktionsbereich (1.5) geführt, in dem Stickoxide zu Stickstoff reduziert werden (beispielsweise über reinem Kupfer). Anschließend erfolgt die Abtrennung von Wasser (1.6) und die Abtrennung und Bestimmung des CO₂ Anteils (1.7 und 1.8). Nicht gezeigt ist der Bereich, in dem der Stickstoffanteil bestimmt wird, der aber in einer dem Fachmann geläufigen Art und Weise angeordnet werden kann.

Kernstück der Vorrichtung ist eine Verbrennungs-/Oxidationsanordnung, wie sie schematisch in Figur 2 dargestellt ist (der schematische Gesamtablauf ist in Figur 1, s.o. skizziert).

Die dargestellte Verbrennungseinheit umfasst zunächst den Bereich, in den die zu vermessenden Proben eingeführt werden. Hier erfolgt die Überführung der Probe in den gasförmigen Zustand, wobei schon eine weitgehende Oxidation stattfinden kann. Bei flüssigen Proben ist für diese Verdampfung die Temperatur in diesem Bereich der Vorrichtung ausreichend, bei festen Proben erfolgt die Überführung in den gasförmigen Zustand durch die kombinierte Wirkung der hier herrschenden hohen Temperatur mit dem vorliegenden (hohen) Sauerstoffüberschuss. Anschießend erfolgt, katalysiert durch den hier beschriebenen chromfreien Katalysator, die für die Messung notwendige vollständige Oxidation der gasförmigen Bestandteile.

Die Probe, die entweder in einer Kapsel vorgesehen ist oder in einem geeigneten Tiegel/Probenbehälter vorliegt, wird automatisch mittels eines nicht näher dargestellten Greiferarms (ggf. in Kombination mit einer automatischen Einspritzanlage), in den ersten Teil der Verbrennungseinheit eingeführt. Alternativ kann die Probe in Folie verpackt in einen xy-gesteuerten, pneumatischen Probengeber gegeben werden. Hierbei ist ein Greifmechanismus nicht notwendig. Geeignete Folien zur Verpackung der Probe sind insbesondere Metallfolien, bevorzugt Zinn-Folien oder stickstofffreies Papier. Derartige Folien stören die beabsichtigte Analyse nicht bzw. ihren Einfluss auf das Analyseergebnis kann rechnerisch korrigiert werden. Das notwendige sauerstoffreiche Gasgemisch wird in geeigneter Weise zugeführt. Dabei wird sichergestellt, dass die Probe bereits vor der Einführung in die Verbrennungseinheit mit dem jeweiligen Gasgemisch beaufschlagt wird. Die Temperatur ist einstellbar, um so einerseits schnelle Verdampfung/Oxidation sicherzustellen, und um andererseits den Katalysator nicht zu beeinträchtigen.

Figur 2 zeigt eine Detailansicht des Bereichs der Vorrichtung, der den Katalysator enthält. Dieser kann auf unterschiedliche Art in der Vorrichtung angeordnet werden, wichtig ist dabei die Zurverfügungstellung einer großen Kontaktoberfläche mit dem Gasgemisch. Wie vorstehend bereits beschrieben, kann eine derartig große Kontaktoberfläche durch das Vorliegen von geträgerten Katalysatoren sichergestellt werden. In Figur 2 bezeichnet der Pfeil die Gasflussrichtung, das Referenzzeichen (2.1) den Katalysatoren, der hier in Form einer Kugel aus Al₂O₃ Träger mit aufgebrachtem Mischoxidkatalysatoren gezeigt ist. Das Referenzzeichen (2.2.) bezeichnet das Glasrohr, in welchem der Katalysator angeordnet ist.

Mit dem erfindungsgemäßen Verfahren lassen sich alle Arten an Proben untersuchen. Durch geeignete Ausgestaltung des Probengebers können sowohl feste als auch flüssige Proben vermessen werden. Gleichzeitig ist das erfindungsgemäße Verfahren tolerant gegenüber Elementen, die ggf. bei traditionellen Messungen problematisch sind, wie beispielsweise Halogene bzw. allgemein salzhaltige Matrices.

Durch den Einsatz eines Katalysatoren auf der Grundlage einer Mischung mit mindestens drei Metallkomponenten (Cu, Mn, Ce, mit in dieser Reihenfolge abnehmenden Masseanteilen) wird eine gute Oxidation sichergestellt. Die Metallkomponenten liegen im Katalysator in der Form ihrer Oxide vor. Durch die Mischungsverhältnisse der Komponenten können Katalysatoren erhalten werden, die spezifisch für bestimmte Probenarten geeignet sind. Die drei wesentlichen Metallkomponenten sind durch die im Verfahren herrschenden Bedingungen (relativ hohe Temperaturen und hoher Sauerstoffanteil) stabil im Katalysator, eventuell auftretende Defekte (wie lokale Reduktion) werden bei den im Verfahren herrschenden Bedingungen automatisch im laufenden Betrieb regeneriert, ohne Notwendigkeit einer eigenen Regenerationsbehandlung.

Der in der vorliegenden Erfindung einzusetzende Katalysator ist chromfrei. Neben den wesentlichen Komponenten können zusätzliche Metallkomponenten enthalten sein, wenn sich dadurch Vorteile ergeben. Bevorzugt ist jedoch der Katalysator, der neben den Oxiden von Mn, Cu und Ce keine weiteren Metallkomponenten (als Metall oder in der Form eines Oxids) enthält.

### Messergebnisse

Mit dem beschriebenen Aufbau und der vorstehend angegebenen Verfahrensweise wurden unterschiedliche Proben, Referenz- und Reinsubstanzen vermessen. Die dabei erhaltenen Ergebnisse waren exakt und zeigten keinerlei relevante Variabilität. Es konnten mit einer Katalysatorfüllung bis zu 1200 Proben ohne Qualitätsabfall bestimmt werden.

Somit stellt das beschriebene Verfahren mit der entsprechenden Vorrichtung und die beschriebene Verwendung eine Lösung für das Problem der Verwendung von Chrom in Analysegeräten zur Verfügung, wobei die erforderliche Genauigkeit und Reproduzierbarkeit der Analyse erhalten blieb.

## Patentansprüche

1. Verfahren zur Elementaranalyse, insbesondere für die Bestimmung von Kohlenstoff und Stickstoff, mit folgenden Verfahrensschritten:
- Zuführen der Probe (1.2a) zu einem ersten Teil einer Verbrennungseinheit (1.3), bei Temperaturen von mindestens 500°C und einer Atmosphäre mit Sauerstoffüberschuss,
- Leiten des entstehenden Gases zu Oxidationszwecken über einen Metalloxidkatalysator (1.4) in einem zweiten Teil der Verbrennungseinheit,
- Abtrennung von CO₂ und H₂O (1.6) durch bekannte Gastrocknungssysteme bzw. Absorptionssysteme,
- Reduktion der erhaltenen Stickoxide (1.5), vorzugsweise über einer Oberfläche reinen Kupfers, und Messung des erhaltenen Stickstoffs über einen geeigneten Detektor bevorzugt einen kalibrierten Wärmleitfähigkeitsdetektor,
- Messen des Anteils an Kohlenstoff in der Probe über die Bestimmung des CO₂-Gehalts (1.7,1.8), vorzugsweise über eine quantitative Desorption des im Analysenprozess adsorbierten CO₂ und anschließende Detektion, vorzugsweise durch einen kalibrierten Wärmeleitfähigkeitsdetektor,
**dadurch gekennzeichnet, dass** der Metalloxidkatalysator Oxide von Cer, Kupfer und Mangan auf einem Träger aus Aluminiumoxid umfasst, dass die Menge an Ce, Mn und Cu im Katalysator (Masseverhältnis) das Verhältnis Ce < Mn < Cu erfüllt, und dass der Katalysator edelmetallfrei ist und kein Ag, Ti, Zr, Cr oder Ni enthält.

2. Verfahren nach Anspruch 1, **dadurch gekennzeichnet, dass** die Probe (1.2a) über einen automatischen Probengeber in die Verbrennungseinheit (1.3) eingebracht wird.

3. Verfahren nach einem der vorstehenden Ansprüche, wobei der Metalloxidkatalysator (1.4) **dadurch gekennzeichnet ist, dass** die katalytisch wirksamen Bestandteile auf einem Träger aus Al₂O₃ aufgebracht sind.

4. Verfahren nach Anspruch 3, wobei der geträgerte Metalloxidkatalysator (1.4) in der Form eines Granulats, in Kugelform oder in monolithischer Form vorliegt, bevorzugt in Kugelform, wobei die Kugeln vorzugsweise einen Durchmesser von 1-6 mm, besonders bevorzugt 2-4 mm aufweisen.

5. Verfahren nach Anspruch 1 bis 4, **dadurch gekennzeichnet, dass** die Atmosphäre mit Sauerstoffüberschuss reiner Sauerstoff ist.

6. Verfahren nach einem der vorstehenden Ansprüche, wobei die Atmosphäre in der Verbrennungseinheit ein Trägergas enthält und als Trägergas ein Edelgas eingesetzt wird, bevorzugt Argon oder Helium.

7. Verwendung eines Metalloxidkatalysators (1.4) zur Oxidation aller Probenbestandteile, insbesondere zur Aufoxidation von Kohlenmonoxid und flüchtigen organischen Verbindungen (VOC) zu Kohlendioxid, in einem Verfahren zur Elementaranalyse,
**dadurch gekennzeichnet, dass** der Metalloxidkatalysator Oxide von Cer, Kupfer und Mangan umfasst, dass die Menge an Ce, Mn und Cu im Katalysator (Masseverhältnis) das Verhältnis Ce < Mn < Cu erfüllt, und dass der Katalysator edelmetallfrei ist und kein Ag, Ti, Zr, Cr oder Ni enthält.

8. Vorrichtung zur Elementaranalyse, insbesondere zur Bestimmung von Kohlenstoff, umfassend eine Verbrennungseinheit (1.3), die zumindest teilweise einen Metalloxidkatalysator enthält,
**dadurch gekennzeichnet, dass** der Metalloxidkatalysator Oxide von Cer, Kupfer und Mangan umfasst, dass die Menge an Ce, Mn und Cu im Katalysator (Masseverhältnis) das Verhältnis Ce < Mn < Cu erfüllt, und dass der Katalysator edelmetallfrei ist und kein Ag, Ti, Zr, Cr oder Ni enthält.

## Claims

1. Method for elemental analysis, in particular for the determination of carbon and nitrogen, comprising the following method steps:
- feeding the sample (1.2a) to a first part of a combustion unit (1.3) at temperatures of at least 500°C and an atmosphere with an oxygen excess,
- passing the resulting gas for oxidation purposes over a metal oxide catalyst (1.4) in a second part of the combustion unit,
- separation of CO₂ and H₂O (1.6) by known gas drying systems or absorption systems,
- reduction of the nitrogen oxides (1.5) obtained, preferably over a surface of pure copper, and measurement of the nitrogen obtained using a suitable detector, preferably a calibrated thermal conductivity detector,
- measuring the amount of carbon in the sample by determining the CO₂ content (1.7,1.8), preferably by quantitative desorption of the CO₂ adsorbed in the analytical method and subsequent detection, preferably by a calibrated thermal conductivity detector,
**characterized in that** the metal oxide catalyst comprises oxides of cerium, copper and manganese on an aluminum oxide carrier, **in that** the amount of Ce, Cu and Mn in the catalysts (mass ratio) satisfies the ratio Ce < Mn < Cu and **in that** the catalyst is free of precious metals and does not contain Ag, Ti, Zr, Cr or Ni.

2. Method according to claim 1, **characterized in that** the sample (1.2a) is introduced into the combustion unit (1.3) via an automatic sampler.

3. Method according to one of the preceding claims, wherein the metal oxide catalyst (1.4) is **characterized in that** the catalytically active components are applied to a carrier of Al₂O₃.

4. Method according to claim 3, wherein the supported metal oxide catalyst (1.4) is in the form of granules, in spherical form or in monolithic form, preferably in spherical form, wherein the spheres preferably having a diameter of 1-6 mm, particularly preferably 2- 4 mm.

5. Method according to claim 1 to 4, **characterized in that** the atmosphere with oxygen excess is pure oxygen.

6. Method according to one of the preceding claims, wherein the atmosphere in the combustion unit contains a carrier gas and a noble gas is used as carrier gas, preferably argon or helium.

7. Use of a metal oxide catalyst (1.4) for the oxidation of all sample components, in particular for the autoxidation of carbon monoxide and volatile organic compounds (VOC) to carbon dioxide, in a method for elemental analysis, **characterized in that** the metal oxide catalyst comprises oxides of cerium, copper and manganese, **in that** the amount of Ce, Cu and Mn in the catalysts (mass ratio) satisfies the ratio Ce < Mn < Cu and **in that** the catalyst is free of precious metals and does not contain Ag, Ti, Zr, Cr or Ni.

8. Apparatus for elemental analysis, in particular for determining carbon, comprising a combustion unit (1.3) containing at least partially a metal oxide catalyst, **characterized in that** the metal oxide catalyst comprises oxides of cerium, copper and manganese, **in that** the amount of Ce, Cu and Mn in the catalysts (mass ratio) satisfies the ratio Ce < Mn < Cu and **in that** the catalyst is free of precious metals and does not contain Ag, Ti, Zr, Cr or Ni.

## Revendications

1. Procédé d'analyse élémentaire, permettant en particulier de déterminer le carbone et l'azote, comprenant les étapes de procédé ci-dessous consistant à :
- amener l'échantillon (1.2a) jusqu'à une première partie d'une unité de combustion (1.3), à des températures d'au moins 500°C et dans une atmosphère présentant un excès d'oxygène,
- conduire, à des fins d'oxydation, le gaz jusqu'à une seconde partie de l'unité de combustion en le faisant passer sur un catalyseur à oxyde métallique (1.4),
- séparer le CO₂ et le H₂O (1.6) grâce à des systèmes de déshydratation de gaz ou des systèmes d'absorption connus,
- réduire les oxydes d'azote (1.5) obtenus, de manière préférée en les faisant passer sur une surface de cuivre pur, et
- mesurer l'azote obtenu grâce à un détecteur approprié, de manière préférée un détecteur de conductivité thermique étalonné,
- mesurer la proportion de carbone dans l'échantillon en déterminant la teneur en CO₂ (1.7, 1.8), de manière préférée grâce à une désorption quantitative du CO₂ adsorbé dans le procédé d'analyse suivie d'une détection, de manière préférée grâce à un détecteur de conductivité thermique étalonné,
**caractérisé en ce que** le catalyseur à oxyde métallique comprend des oxydes de cérium, de cuivre et de manganèse sur un support d'oxyde d'aluminium, **en ce que** la quantité de Ce, Mn et Cu dans le catalyseur (rapport massique) satisfait le rapport Ce < Mn < Cu, et **en ce que** le catalyseur est exempt de métaux rares et ne contient pas d'Ag, de Ti, de Zr, de Cr ou de Ni.

2. Procédé selon la revendication 1, **caractérisé en ce que** l'échantillon (1.2a) est introduit dans l'unité de combustion (1.3) par l'intermédiaire d'un distributeur d'échantillon automatique.

3. Procédé selon l'une quelconque des revendications précédentes, dans lequel le catalyseur à oxyde métallique (1.4) est **caractérisé en ce que** les composants catalytiquement actifs sont appliqués sur un support en Al₂O₃.

4. Procédé selon la revendication 3, dans lequel le catalyseur à oxyde métallique (1.4) supporté se présente sous forme de granules, sous forme sphérique ou sous forme monolithique, de manière préférée sous forme sphérique, dans lequel les billes présentent de manière préférée un diamètre compris entre 1 et 6 mm, de manière particulièrement préférée compris entre 2 et 4 mm.

5. Procédé selon les revendications 1 à 4, **caractérisé en ce que** l'atmosphère présentant un excès d'oxygène est constituée d'oxygène pur.

6. Procédé selon l'une quelconque des revendications précédentes, dans lequel l'atmosphère au sein de l'unité de combustion contient un gaz porteur, et un gaz rare, de manière préférée de l'argon ou de l'hélium, est utilisé comme gaz porteur.

7. Utilisation d'un catalyseur à oxyde métallique (1.4) pour l'oxydation de tous les composants d'échantillon, en particulier pour l'oxydation du monoxyde de carbone et de composés organiques volatils (COV) en dioxyde de carbone, dans un procédé d'analyse élémentaire,
**caractérisé en ce que** le catalyseur à oxyde métallique comprend des oxydes de cérium, de cuivre et de manganèse, **en ce que** la quantité de Ce, de Mn et de Cu dans le catalyseur (rapport massique) satisfait le rapport Ce < Mn < Cu, et **en ce que** le catalyseur est exempt de métaux rares et ne contient pas d'Ag, de Ti, de Zr, de Cr ou de Ni.

8. Dispositif d'analyse élémentaire, permettant en particulier de déterminer le carbone, comprenant une unité de combustion (1.3) contenant au moins en partie un catalyseur à oxyde métallique,
**caractérisé en ce que** le catalyseur à oxyde métallique comprend des oxydes de cérium, de cuivre et de manganèse, **en ce que** la quantité de Ce, de Mn et de Cu dans le catalyseur (rapport massique) satisfait le rapport Ce < Mn < Cu, et **en ce que** le catalyseur est exempt de métaux rares et ne contient pas d'Ag, de Ti, de Zr, de Cr ou de Ni.
